# EUROPEAN PATENT APPLICATION

(11) **EP 4 372 601 A1**
(43) Date of publication of application: **22.05.2024**
(21) Application number: 23199457.5
(22) Date of filing: 25.09.2023
(51) Int. Cl.: G06F 30/27, G05B 17/00, G05B 19/418, G06N 20/00, G06F 111/08, G06F 111/10

(54) **METHOD AND SYSTEM FOR RAPID GENERATION AND ADAPTATION OF INDUSTRIAL DIGITAL TWIN MODELS**

(30) Priority: 18.11.2022 IN 202221066557
(71) Applicant: Tata Consultancy Services Limited, Maharashtra (IN)
(72) Inventor: DEODHAR, ANIRUDH, 411013 Pune - Maharashtra (IN); JADHAV, VISHAL SUDAM, 411013 Pune - Maharashtra (IN); KARANDE, SHIRISH SUBHASH, 411013 Pune - Maharashtra (IN); VIG, LOVEKESH, 201309 Noida - Uttar Pradesh (IN); MAJUMDAR, RITAM, 411013 Pune - Maharashtra (IN); RUNKANA, VENKATARAMANA, 411013 Pune - Maharashtra (IN)
(74) Representative: Goddar, Heinz J.

(57) **Abstract**

A method and system that can enable quick development of Physics Informed Digital Twin, PIDT, models that are generalized, do not need re-training for dynamic conditions in the industrial plants, can learn from multiple data sources, equipment, and materials by receiving data (202) related to a design and one or more materials of one or more industrial equipment, one or more operating conditions, and one or more governing equations related to the one or more industrial equipment or process wherein the plurality of data related to design comprise make, type, dimensions of the equipment and the specific design aspects of the equipment. Segregating the data based on critical influencing variables, CIV, (204). Generating design of experiments using the CIV (206). Building PIDT models for each design of CIVs (208). Building homogenised child PIDT models (214). Extracting learning parameters (216) and building master IPDT models with usign the learning parameters (218).

## Description

### CROSS-REFERENCE TO RELATED APPLICATIONS AND PRIORITY

The present application claims priority from Indian patent application number 202221066557, filed on November 18, 2022.

### TECHNICAL FIELD

The disclosure herein generally relates to the field of building and maintaining predictive models for industrial digital twins and more particularly, to a method and system for building pre-trained models learning from a plurality of datasets and enabling an adaptation of the pre-trained models to dynamic conditions.

### BACKGROUND

Digital twins have become ubiquitous in almost every industry. Manufacturing and process industry faces certain challenges with digital twin building and maintenance. Although machine learning (ML) or deep learning (DL) models have proven to be very promising, building these models in an industrial setting faces certain challenges. Industrial data is often limited or of low quality, making it imperative to learn from multiple varied sources. However, firstly inconsistency in data from various sources leads to difficulties in learning from it. The inconsistency can stem from data received from different equipment (design or material variations), at different frequencies or timescales (data granularity).

Secondly, industrial data lacks measurements at critical locations or for critical processes. For example, there are no sensors inside a furnace where the most critical things related to a process take place. This makes the pure data-driven models inconsistent with physics. Physic-guided data-driven modeling has been explored but is known to face challenges in real conditions, that include time/effort consumed to build the models, inability to adapt to dynamic conditions and hence not amenable to real-time applications. Existing solutions do not address the problem satisfactorily and require time consuming and expertise intensive processes.

### SUMMARY

Embodiments of the disclosure present technological improvements as solutions to one or more of the above-mentioned technical problems recognized by the inventors in conventional systems. For example, in one embodiment, a method and system for building pre-trained models learning from a plurality of datasets and enabling an adaptation of the pre-trained models to dynamic conditions is provided.

In one aspect, a processor-implemented method for building pre-trained models learning from a plurality of datasets and enabling an adaptation of the pre-trained models to dynamic conditions. The processor-implemented method comprising receiving, via an input/output interface, a plurality of data related to a design and one or more materials of one or more industrial equipment, one or more operating conditions, and one or more governing equations related to the one or more industrial equipment or process as an input. Further, the method comprising pre-processing the received input by normalizing the plurality of data and the one or more governing equations and parameterizing the one or more normalized governing equations using one or more predefined critical influential variables (CIVs).

Furthermore, the processor-implemented method comprising selecting a range and a step size of values related to variation in each of the one or more predefined CIVs, creating a plurality of design of experiments (DoE) on the pre-processed input by varying the critical influential variables across the selected range and step size of values, constructing a plurality of child Physics Informed Digital Twin (PIDT) models corresponding to each of the plurality of governing equations, homogenizing each of the plurality of child PIDT models if architecture of the one or more child PIDTs are different from each other, extracting one or more learning parameters of the plurality of homogenized child PIDT models to map with corresponding the set of one or more predefined CIVs and creating a master PIDT model using the extracted one or more learning parameters of the plurality of homogenized child PIDT models and the set of CIVs.

In another aspect, a system for building pre-trained models learning from a plurality of datasets and enabling an adaptation of the pre-trained models to dynamic conditions. The system comprises an input/output interface configured to receive a plurality of data related to a design and one or more materials of one or more industrial equipment, one or more operating conditions, and one or more governing equations related to the one or more industrial equipment or process as an input and a memory in communication with the one or more hardware processors, wherein the one or more hardware processors are configured to execute programmed instructions stored in the memory.

Further, the system is configured to pre-process the received input by normalizing the plurality of data and the one or more governing equations and parameterizing the one or more normalized governing equations using one or more predefined critical influential variables (CIVs). Furthermore, the system is configured to select a range and a step size of values related to variation in each of the one or more predefined CIVs, create a plurality of design of experiments (DoE) on the pre-processed input by varying the critical influential variables across the selected range and step size of values, construct a plurality of child Physics Informed Digital Twin (PIDT) models corresponding to each of the plurality of governing equations, homogenize each of the plurality of child PIDT models if architecture of the one or more child PIDTs are different from each other, extract one or more learning parameters of the plurality of homogenized child PIDT models to map with corresponding the set of one or more predefined CIVs and create a master PIDT model using the extracted one or more learning parameters of the plurality of homogenized child PIDT models and the set of CIVs.

In yet another aspect, one or more non-transitory machine-readable information storage mediums comprising one or more instructions which when executed by one or more hardware processors cause a method for building pre-trained models learning from a plurality of datasets and enabling an adaptation of the pre-trained models to dynamic conditions. The processor-implemented method comprising receiving, via an input/output interface, a plurality of data related to a design and one or more materials of one or more industrial equipment, one or more operating conditions, and one or more governing equations related to the one or more industrial equipment or process as an input. Further, the method comprising pre-processing the received input by normalizing the plurality of data and the one or more governing equations and parameterizing the one or more normalized governing equations using one or more predefined critical influential variables (CIVs).

Furthermore, the processor-implemented method comprising selecting a range and a step size of values related to variation in each of the one or more predefined CIVs, creating a plurality of design of experiments (DoE) on the pre-processed input by varying the critical influential variables across the selected range and step size of values, constructing a plurality of child Physics Informed Digital Twin (PIDT) models corresponding to each of the plurality of governing equations, homogenizing each of the plurality of child PIDT models if architecture of the one or more child PIDTs are different from each other, extracting one or more learning parameters of the plurality of homogenized child PIDT models to map with corresponding the set of one or more predefined CIVs and creating a master PIDT model using the extracted one or more learning parameters of the plurality of homogenized child PIDT models and the set of CIVs.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a network diagram of an exemplary system for building creating a master physics informed digital twin (Master PIDT) models and online update of the same in a digital twin architecture, in accordance with some embodiments of the present disclosure.
FIG. 2 is a flowchart to illustrate a method for creating a Master PIDT model comprising a plurality of Child PIDT models and the homogenization routine, in accordance with some embodiments of the present disclosure.
FIG. 3 is a flowchart to illustrate an online update of the master PIDT model and the plurality of child PIDT models in a digital twin environment, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Physics informed machine learning has been very successful in scientific discovery in multiple ways overcoming the challenges of standalone data-driven and first principles based modeling. However, the Physics informed Machine Learning faces challenges in real industrial environment and in digital twins where the systems are far more complex. Physics of the process is multi-dimensional, multi-material and multi-phenomena. Therefore, building physics informed machine learning models is challenging as it needs to be developed from scratch for each new system or for each significant change in the process/equipment. Once built, the models are not suitable for real-time dynamic changes in operating conditions. In addition, such models do not generalize well across multiple plants/equipment. The models cannot learn based on data and information coming from diverse sources. Therefore, there is a need of developing a method and system that can enable quick development of physics-informed digital twin models that are generalized, do not need re-training for dynamic conditions in the industrial plants, can learn from multiple data sources, equipment, and materials. On top of this, there is a need to develop a method and system that can enable these Physics Informed Digital Twin (PIDT) models to learn and update themselves with minimal human intervention in digital twin environments.

Disclosure herein addresses the issues mentioned above by providing a method and a system for building a child-parent system of physics informed machine learning models based on data from diverse sources (designs, materials, and conditions). The method also enables learning or updating of the PIDT models based on data obtained from various sources at different locations, granularity, and time scales. Lastly, the method democratizes the model building by providing a homogenization routine for diverse child PIDT models obtained from different sources including crowdsourced.

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

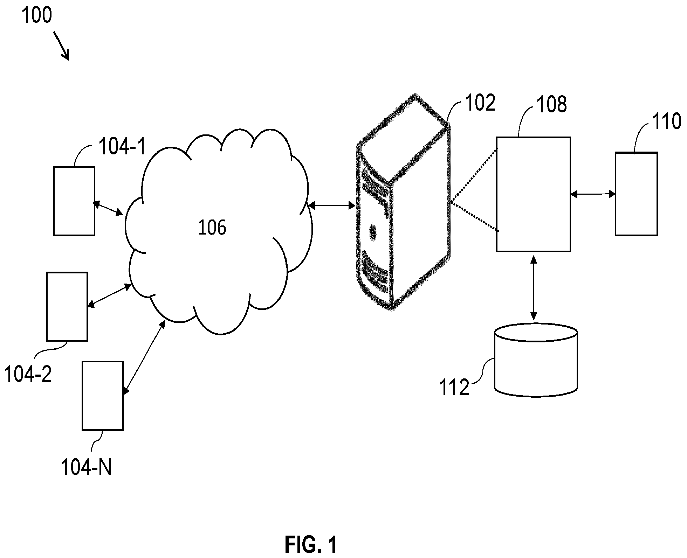

Referring now to the drawings, and more particularly to FIG. 1 through FIG. 3, where similar reference characters denote corresponding features consistently throughout the figures, there are shown preferred embodiments and these embodiments are described in the context of the following exemplary system and/or method.

FIG. 1 illustrates a network diagram of a system 100 for building and updating a master physics-informed digital twin (PIDT) models. Although the present disclosure is explained considering that the system 100 is implemented on a server, it may also be present elsewhere such as a local machine. It may be understood that the system 100 comprises one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 may be implemented in a workstation, a mainframe computer, a server, and a network server. In an embodiment, the computing device 102 further comprises one or more hardware processors 108, one or more memory 110, hereinafter referred as a memory 110 and a data repository 112, for example, a repository 112. The data repository 112 may also be referred as a dynamic knowledge base 112 or a knowledge base 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the system 100. The memory 110 further comprises a plurality of modules. The plurality of modules is configured to perform various functions.

The system 100 supports various connectivity options such as BLUETOOTH^{®}, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

The system 100 receives data as an input from plurality of sources via one or more input/output interfaces. The input data comprises real-time and historical plant/equipment data (sensor, maintenance and design data, materials data), user input data (design of experiments levels, variables of interest), PIDT model data (child PIDT model executables, architectures, hyperparameters, master PIDT desired architecture, governing equations).

In another embodiment of the disclosure, the system 100 pre-process the received input by normalizing the plurality of data and the one or more governing equations and parameterizing the one or more normalized governing equations using one or more predefined critical influential variables (CIVs). The one or more predefined critical influential variables (CIVs) may comprise variables related to the design, the one or more materials, maintenance, and operating conditions. Further, the normalization comprises non-dimensionalizing the plurality of governing equations. Furthermore, the system 100 selects a range and a step size of values related to variation in each of the one or more predefined CIVs.

In yet another embodiment of the disclosure, the system 100 uses the pre-processed data and user shared Design of Experiments (DoEs) data to create a plurality of child PIDT models for each of the experiments. As an embodiment of this disclosure, the child PIDT model building module of the system 100 can also receive a pre-built PIDT model from external source. As an embodiment of this disclosure, the child PIDT model comprise of a physics-informed neural network model that constraints the loss of the neural network by embedding governing equations in them.

Further, the system 100 uses the plurality of child PIDT models and converts all of them into a homogenous architecture so that they can be used to build the master PIDT. In one embodiment of the disclosure, this is done by generating data by using the plurality of child PIDT models and then adjusting those plurality of child PIDT models to a uniform architecture by re-building using the generated data in a supervised manner.

In another embodiment of the disclosure, the system 100 uses the plurality of homogenized child PIDT models and builds a master PIDT model. In the process, it uses the learning parameters of the plurality of homogenized child PIDT models along with the dynamic conditions used in each of them. In another embodiment of the disclosure, master PIDT model is a hypernetwork that uses the dynamic conditions as input and predicts the learning parameters corresponding to the homogenized child PIDT model. All the master PIDT model, the plurality of child PIDT models and homogenized child PIDT models are stored in the database along with the hyperparameters, accuracy metric, and the data associated with each.

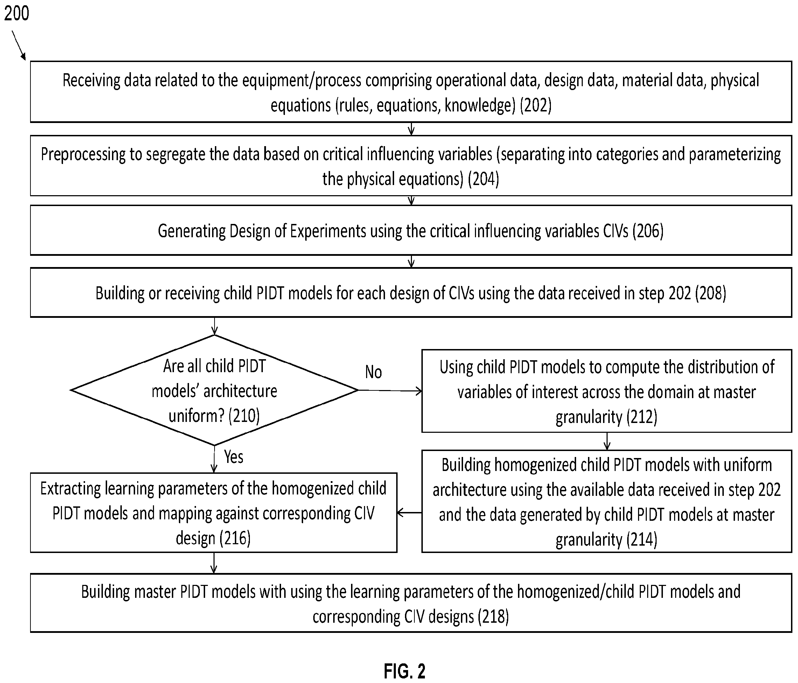

FIG. 2 shows a flow chart 200 to illustrate a method 200 of creating a master physics guided digital twin (Master PIDT) model comprising Child PIDT models and the homogenization routine, in accordance with some embodiments of the present disclosure.

Initially at the step 202, receiving the data required for building master PIDT models. The data comprises operational data (historical sensor data, maintenance information, design data (equipment make, dimensions) materials data (equipment materials of construction and properties, process elements and properties such as conductivity, specific heat), physics data (governing equations of the process, heuristic rules, physics-based models).

At the next step 204, the received data is pre-processed for building child PIDT models. The pre-processing comprises of non-dimensionalizing the governing equations, Parameterizing the equations using critical influential variables (CIV) categorized into operation variables (OV), material variables (MV) and design variables (DV). OV comprise of variables such as internal/external sensor measurements such as temperatures, pressures rotation speeds and flow rates. MV comprises variables related to influence of material or process such as conductivity, chemical kinetics, heat transfer coefficient. DV comprises variables such as dimensions, type of equipment of the equipment. Obtaining typical range/categories of each of the OV, MV, DVs. For instance, the range of inlet temperature in a heat exchanger could be 100 to 500 deg C, range of materials could be Aluminum, steel and alloys and range for the diameter could be 1-10 meters.

At the next step 206, using the information received from step 202 for creating a design of experiments (DoEs) by varying the OV, MV and DV across the ranges and a given step change rate. For example, table below shows a sample design of experiments in a heat exchanger set up based on Taguchi DoE. Any DoE technique could be used, the one shown here is exemplary only.

**Table 1**

| **Experiment** | **Material** | **Gas Inlet Temperature** | **Air Inlet Temperature** |
|---|---|---|---|
| 1 | Steel | 300 | 10 |
| 2 | Steel | 350 | 30 |
| 3 | Steel | 400 | 50 |
| 4 | Aluminium | 300 | 30 |
| 5 | Aluminium | 350 | 50 |
| 6 | Aluminium | 400 | 10 |
| 7 | Cast Iron | 300 | 50 |
| 8 | Cast Iron | 350 | 10 |
| 9 | Cast Iron | 400 | 30 |

At the next step 208, building a plurality of child PIDT models for all the designs created for the CIV designs in step 206. Each of the one or more child PIDT model is associated with one experiment or design of CIVs. As an embodiment of this disclosure, the child PIDT model comprise of a physics-informed neural network. Alternatively, Step 206 may also comprise receiving existing/pre-built child PIDT models specific to a CIV design from multiple sources.

A physics-informed neural network approximates the solution to the governing equations (often ordinary differential equations) by creating a neural network-based function approximator. Typically, the governing equations are embedded in the loss function of the network along with the boundary conditions. The OVs are typically encoded as boundary conditions. The MVs and the DVs are part of the evaluation of governing equations residue. These physics informed neural networks however only work for a given set of CIVs and cannot be used to predict the variable of interest for a different CIV.

At the next step 210, checking if the architecture of all the child PIDT models is identical or different. If identical, the trainable parameters (weights of the network) of each of child PIDT model are extracted and mapped against the corresponding CIV values in step 216. This data is used to build a master PIDT model. In one embodiment of the disclosure, the master PIDT is build using a hypernetwork. The hypernetwork is trained using the trained weights of the child PIDT as a function of respective CIV values. The creation of a design of experiments in step 206, provides the optimum training set of training of the hypernetwork, improving the balance between the computational effort and the accuracy.

If the architecture of child PIDTs is different, then the child PIDT models are homogenized using step 212 and 214. Step 212 comprises of using the received child PIDT models to compute the distribution of variable of interest on a set of predefined boundary and collocation points within the domain, which is referred to as master granularity. Step 214 comprises training homogenized child PIDT using the data generated by the child PIDT models. As one embodiment of the disclosure, the homogenized PIDT is a Physics-informed neural network with a specific uniform architecture across all the child PIDT models. Once this is done, the weights of these homogenized child PIDTs are extracted as shown in step 216.

In one embodiment of the disclosure, the plurality of child PIDT models can also belong to different equipment designs, different materials and different operating conditions. In addition, each of the plurality of child PIDT models may be trained based on a set of historical operation conditions data (typically sensor data). Each of these datasets could be measured at different locations in the equipment, at different times in each equipment and at different granularity in each equipment. Current state-of-the-art methods cannot build a generalized model across all the CIV and data variations. The method provides a way to use all the information together and build a generalized master PIDT model that does not need re-training.

In one example, wherein a master physics-informed digital twin model building and updating process is explained in context of Air Preheater Temperature profile prediction using the master PIDT model. Air preheater (APH) is rotary regenerative type heat exchanger used in thermal power plants, used for exchanging heat between high temperature flue gases and ambient air, undergoes degradation phenomenon called a fouling. The fouling in the APH is strong function of the temperature profile of flue gas flowing through the APH. The APH herein has cylindrical shape and constitutes of three different layers of metallic matrix. Each of the three different layers of metallic matrix can have different material properties. Measurements sensors are placed on the APH at the inlet and outlet for measurement of flow rate, flow temperature flow pressure, and flow chemical composition. Sensor measurements are captured in a distributed control system (DCS) and stored in historian/database.

As described in present disclosure, OV represented by data from sensor measurements (flow rate, temperature, pressure, chemical composition), DV represented by air preheater design (dimensions, design), MV represented by properties of fluids and material of construction, user input data for number of experiments and details of experiments, child PIDT model details (executables, architecture, hyperparameters, governing equations etc.), master PIDT model details (desired model architecture) are received by the system 100.

Herein each of the plurality of child PIDT models is a neural network which takes the co-ordinates of interior point of the APH (considering APH as frame of reference) as input and predicts the temperature at the input co-ordinates. Also, the master PIDT model referred here takes input as given CIVs (flow rate measurement and flow temperature, dimensions, material properties) and learning parameters of the child PIDT as the output. In one illustration, the governing equations of the equipment are the differential equations representing the conservation of heat and mass within the APH.

In one instance, preprocessing of the data received by the system 100 is performed for the plurality of Child PIDT models as governing equations are normalized with respect to CIV such that, dependent variables of governing equations in this case temperature value ranges from 0 to 1 and boundary conditions of governing equations are normalized so that range of boundary condition becomes 0 to 1.

In another instance, preprocessing for master PIDT model can be performed as all design of experiments data can be normalized using min max scalar technique and learning parameters of the plurality of child PIDT models is built for distinct experiments are combined and further classified in training-validation-test data.

In another embodiment, wherein using the range of parameters comprising sensor measurements, design data, material properties, flow properties, ambient conditions design of experiments is generated (as shown in table 1). Corresponding to each experiment in design of experiment table, a child PIDT is built. For building of child PIDT, using experiment parameter values comprising, flow inlet temperature and flow rate measurement, flow properties like heat capacity, viscosity etc., APH design data (dimensions and design), APH material properties like thermal conductivity, heat capacity etc., normalized governing equations, desired child PIDT architecture are used. Child PIDT takes input as co-ordinates of interior location of APH and predicts the temperature at the location for gas/air and matrix. Each child PIDT is for a specific set of CIV design.

Further, the learning parameters of child PIDT for each experiment and experiment parameter values are collected to build the master PIDT model. Herein, child PIDT model is built as mentioned above, however pre-built child PIDT models can also be utilized. For building the master PIDT model, learning parameters for child PIDT models and their corresponding CIV design values are used. Master PIDT model takes input as CIV values and predicts the learning parameter for child PIDT model.

In yet another illustration, a real time execution or prediction using the master PIDT model is performed as follows:
a. CIVs Inlet temperature measurements, flow rate measurements, APH design information (height, diameter, number of materials, material properties like thermal conductivity, heat capacity etc.), gas properties (viscosity, heat capacity, thermal conductivity etc.), air properties (viscosity, heat capacity, thermal conductivity etc.), are collected as input to the master PIDT model.
b. Pre-processing of these inputs is performed, and data is compared with training CIV data of master PIDT model. If the input data collected lies within the range of training data, then prediction for the collected inputs is performed. Otherwise, recalibration of master PIDT is performed to incorporate the out of range input.
c. Master PIDT predicts the learning parameters for the child PIDT for a given value CIV set. Using these predicted learning parameters and architecture data of the child PIDT model, it is used for prediction of temperature for all the interior co-ordinates of the APH. Output of child PIDT model will be gas temperature, air temperature and matrix temperature for the interior co-ordinates of the APH.
d. Child PIDT also predicts the temperature at the outlets of APH, these predictions are used for comparison with actual values of temperature obtained from sensor measurements at outlet. Error in prediction and actual values at the outlet of APH is evaluated and compared with user defined threshold of 1% temperature error or +- 3°C. If error is greater than the user defined threshold value, then master PIDT is recalibrated.

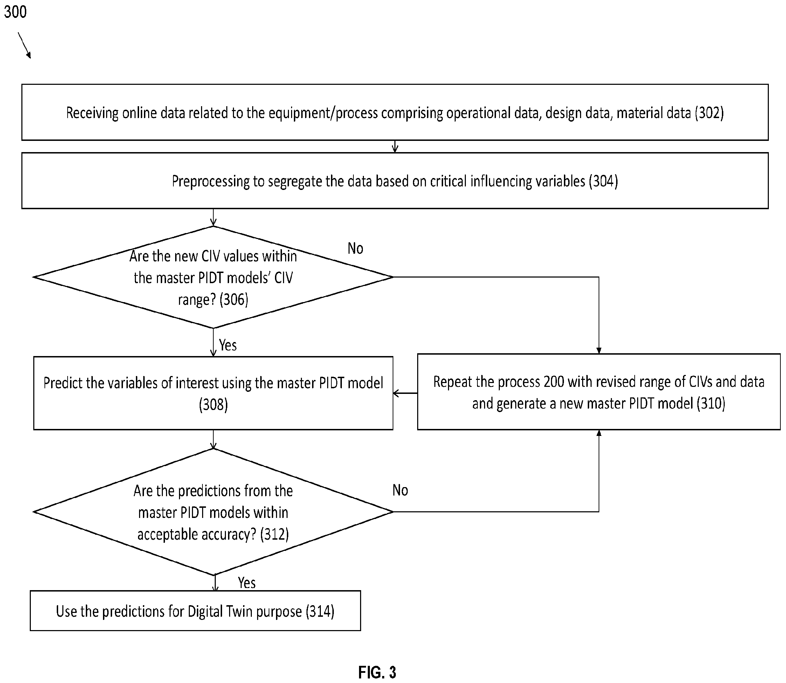

FIG. 3 is a flowchart 300 to illustrate real-time utility and update of the master and child PIDT models in a digital twin environment.

Initially, at the step 302, the processor-implemented method comprises receiving the data required as input for master PIDT model. The data comprises operational data (historical sensor data, maintenance information) design data (equipment make, dimensions) materials data (equipment materials of construction and properties, process elements and properties such as conductivity, specific heat). Some of the data could be received online or even real-time.

At the next step 304, the processor-implemented method comprises pre-processing and preparing this received data in step 302 for inference using master PIDT models. The pre-processing comprises normalizing the data based on the normalization technique adopted in step 204.

At the next step 306, the processor-implemented method comprises determining if the CIV obtained in step 304 belongs to the range of data used for building the master PIDT models. If CIV does not belong to the range of data used for building the master PIDT then master PIDT model is recalibrated using the method mentioned in step 310. If the CIV belong to the range of data used for building the master PIDT model, then CIV is normalized as per the required input processing for master PIDT model.

At the next step 310, the processor-implemented method comprises inferencing using master PIDT model. The Master PIDT predicts the learning parameter of child PIDT model and the underlying child PIDT architecture is then used to predict the variable of interest.

At the next step 312, the processor-implemented method comprises error calculation between prediction of child PIDT model and actual operational data. If the error in prediction and prediction of child PIDT model is greater than the user defined threshold, master PIDT is recalibrated as per method mentioned in step 310. If the error is less than the user defined threshold, then execution control is passed to step 314 for next action, which may comprise of displaying the predictions to user or to use the predictions for recommending an action to the user.

Recalibration approach in step 310 uses the technique described in steps 202-218 in FIG. 2. If the CIV values at step 306 do not belong to range of the input CIV range used to build the master PIDT model at step 218, then another design of experiment based combination of input data is generated, similar to step 206. The only difference is the range of CIV is different from the original range in step 206. Child PIDT models for new experiments are built and learning parameters for child PIDT are generated. Learning parameters of child PIDT obtained for new experiments are combined with original set of learning parameters.

Similarly, new set of experiment parameter is added to the original set of experiments. Master PIDT is built using new set of input (experiments) and output (learning parameters) and new master PIDT model is used further for prediction. If the error of prediction for given CIV as input to the master PIDT model is greater than the user defined threshold, then for a given CIV, child PIDT is built and learning parameter of child PIDT is included in data used for master PIDT. Using the new set of data master PIDT is built and is further used for prediction. The procedure repeats at receipt of new data from the industrial system.

The advantage of a master PIDT model is that it can learn from different industrial equipment of similar design and physical phenomena simultaneously. In addition, the master PIDT model eliminates the need to re-train the otherwise used child PIDT models and therefore is more amenable to real-time digital twin actions.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the problem of time consuming and expertise intensive processes for digital twins for manufacturing and process industry. A method and system that can enable Physics Informed Digital Twin (PIDT) models to learn and update themselves with minimal human intervention in digital twin environments.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs etc.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200) comprising:
receiving (202), via an input/output interface, a plurality of data related to a design and one or more materials of one or more industrial equipment, one or more operating conditions, and one or more governing equations related to the one or more industrial equipment or process as an input, wherein the plurality of data related to design comprise make, type, dimensions of the equipment and the specific design aspects of the equipment;
pre-processing (204), via one or more hardware processors, the received input by:
normalizing the plurality of data and the one or more governing equations, wherein the one or more governing equations comprises the mathematical expression, rules describing the physical phenomena pertaining to the equipment or process; and
parameterizing the normalized one or more governing equations using one or more predefined critical influential variables (CIVs);
selecting (206), via the one or more hardware processors, a range and a step size of values related to variation in each of the one or more predefined CIVs, wherein the one or more predefined critical influential variables (CIVs) may comprise variables related to the design, the one or more materials, maintenance, and operating conditions;
creating (208), via the one or more hardware processors, a plurality of design of experiments (DoE) on the pre-processed input by varying the critical influential variables across the selected range and step size of values;
constructing (210), via the one or more hardware processors, a plurality of child Physics Informed Digital Twin (PIDT) models, wherein the plurality of child PIDT models are specific to a CIV design to predict the variables of interest using the CIV, normalized one or more governing equations and plurality of data corresponding to operating conditions as input;
receiving (212), via the one or more hardware processors, a plurality of child Physics Informed Digital Twin (PIDT) models, wherein the child PIDT models are specific to a CIV design and predict the variables of interest using the CIV, one or more governing equations and plurality of data corresponding to operating conditions as the input;
homogenizing (214), via the one or more hardware processors, each of the plurality of child PIDT models to generate homogenized child PIDT models if architecture of the one or more child PIDT models are different from each other, wherein the steps comprise:
inferring, via the one or more hardware processors, a dataset of variable of interest of each of the plurality of child PIDT models over a fixed master granularity; and
training, via the one or more hardware processors, the plurality of child PIDT models with a predefined uniform architecture corresponding to each of the plurality of child PIDT models specific to a set of CIVs, using the plurality of data received and the data inferred from child PIDT models;
extracting (216), via the one or more hardware processors, one or more learning parameters of the homogenized plurality of child PIDT models to map with corresponding the set of one or more predefined CIVs; and
creating (218), via the one or more hardware processors, a master PIDT model using the extracted one or more learning parameters of the homogenized plurality of child PIDT models and the created set of CIV designs.

2. The processor-implemented method (200) as claimed in claim 1, further comprising:
receiving, via the input/output interface, an online data related to the equipment/process comprising operational data, design data, material data;
pre-processing, via the one or more hardware processors, the received data to segregate critical influencing variables (CIV) values;
predicting, via the one or more hardware processors, variables of interest using the created master PIDT model wherein the segregated CIV values are within the range of CIV values associated with created master PIDT models; and
utilizing, via the one or more hardware processors, the predicted variables of interest for a digital twin purpose wherein the predicted variables of interest from the master PIDT models are within a predefined accuracy.

3. The processor-implemented method (200) as claimed in claim 2, wherein the master PIDT model is updated with a revised range of CIVs and input data if the segregated CIV values are not within the range of CIVs of the master PIDT model and the predicted variable of interest are not within the predefined accuracy.

4. The processor-implemented method (200) as claimed in claim 1, wherein the plurality of data related to materials and maintenance comprise history of maintenance actions, characteristics of operating and construction materials and laboratory measurements.

5. The processor-implemented method (200) as claimed in claim 1, wherein the plurality of data related to operating conditions comprise the historical and real-time sensor data pertaining to the equipment/process.

6. The processor-implemented method (200) as claimed in claim 1, wherein the normalization comprises non-dimensionalizing the plurality of governing equations and parametrizing the plurality of governing equations with respect to one or more predefined CIVs.

7. The processor-implemented method (200) as claimed in claim 1, wherein the plurality of designs of CIVs are generated by DoE methods comprising full factorial method or A Taguchi DoE method.

8. The processor-implemented method (200) as claimed in claim 1, wherein each of the plurality of child PIDT models and homogenized child PIDT models comprise a physics-informed machine learning model specific to a set of one or more predefined CIVs.

9. The processor-implemented method (200) as claimed in claim 1, wherein the master PIDT model comprises a cascading physics informed machine learning model that uses the CIVs as input and predicts the learning parameters corresponding to the homogenized child PIDT model and then predicts the variable of interest using the homogenized child PIDT model.

10. A system (100) comprising:
an input/output interface (102) configured to receive a plurality of data related to a design and one or more materials of one or more industrial equipment, one or more operating conditions, and one or more governing equations related to the one or more industrial equipment or process as an input;
a memory (110) in communication with the one or more hardware processors (108), wherein the one or more hardware processors (108) are configured to execute programmed instructions stored in the memory (110) to;
pre-process the received input by:
normalizing the plurality of data and the one or more governing equations; and
parameterizing the normalized one or more governing equations using one or more predefined critical influential variables (CIVs);
select a range and a step size of values related to variation in each of the one or more predefined CIVs;
create a plurality of design of experiments (DoE) on the pre-processed input by varying the critical influential variables across the selected range and step size of values;
construct a plurality of child Physics Informed Digital Twin (PIDT) models, wherein the plurality of child PIDT models are specific to a CIV design to predict the variables of interest using the CIV, normalized one or more governing equations and plurality of data corresponding to operating conditions as input;
receive a plurality of child Physics Informed Digital Twin (PIDT) models, wherein the child PIDT models are specific to a CIV design and predict the variables of interest using the CIV, one or more governing equations and plurality of data corresponding to operating conditions as the input;
homogenize each of the plurality of child PIDT models to generate homogenized child PIDT models if architecture of the one or more child PIDT models are different from each other, wherein the steps comprise:
inferring a dataset of variable of interest of each of the plurality of child PIDT models over a fixed master granularity; and
train the plurality of child PIDT models with a predefined unform architecture corresponding to each of the plurality of child PIDT models specific to a set of CIVs, using the plurality of data received and the data inferred from child PIDT models;
extract one or more learning parameters of the homogenized plurality of child PIDT models to map with corresponding the set of one or more predefined CIVs; and
create master PIDT model using the extracted one or more learning parameters of the homogenized plurality of child PIDT models and the created set of CIV designs.

11. The system (100) as claimed in claim 10, wherein the one or more hardware processors (108) are further configured by the programmed instructions to:
receive, via the input/output interface, an online data related to the equipment/process comprising operational data, design data, material data;
pre-process the received data to segregate critical influencing variables (CIV) values;
predicting, via the one or more hardware processors, variables of interest using the created master PIDT model wherein the segregated CIV values are within the range of CIV values associated with the created master PIDT models; and
utilize the predicted variables of interest for a digital twin purpose wherein the predicted variables of interest from the master PIDT models are within a predefined accuracy.

12. The system (100) as claimed in claim 11, wherein the master PIDT model is updated with a revised range of CIVs and input data if the segregated CIV values are not within the range of CIVs of the master PIDT model and the predicted variable of interest are not within the predefined accuracy.

13. One or more non-transitory machine-readable information storage mediums comprising one or more instructions which when executed by one or more hardware processors cause:
receiving, via an input/output interface, a plurality of data related to a design and one or more materials of one or more industrial equipment, one or more operating conditions, and one or more governing equations related to the one or more industrial equipment or process as an input;
pre-processing, the received input by:
normalizing the plurality of data and the one or more governing equations; and
parameterizing the normalized one or more governing equations using one or more predefined critical influential variables (CIVs);
selecting a range and a step size of values related to variation in each of the one or more predefined CIVs;
creating a plurality of design of experiments (DoE) on the pre-processed input by varying the critical influential variables across the selected range and step size of values;
constructing a plurality of child Physics Informed Digital Twin (PIDT) models, wherein the plurality of child PIDT models are specific to a CIV design to predict the variables of interest using the CIV, normalized one or more governing equations and plurality of data corresponding to operating conditions as input;
receiving a plurality of child Physics Informed Digital Twin (PIDT) models, wherein the child PIDT models are specific to a CIV design and predict the variables of interest using the CIV, one or more governing equations and plurality of data corresponding to operating conditions as the input;
homogenizing each of the plurality of child PIDT models to generate homogenized child PIDT models if architecture of the one or more child PIDT models are different from each other, wherein the steps comprise:
inferring a dataset of variable of interest of each of the plurality of child PIDT models over a fixed master granularity; and
training the plurality of child PIDT models with a predefined uniform architecture corresponding to each of the plurality of child PIDT models specific to a set of CIVs, using the plurality of data received and the data inferred from child PIDT models;
extracting one or more learning parameters of the homogenized plurality of child PIDT models to map with corresponding the set of one or more predefined CIVs; and
creating a master PIDT model using the extracted one or more learning parameters of the homogenized plurality of child PIDT models and the created set of CIV designs.

14. The one or more non-transitory machine-readable information storage mediums as claimed in claim 13, wherein the one or more instructions which when executed by the one or more hardware processors cause:
receiving an online data related to the equipment/process comprising operational data, design data, material data;
pre-processing the received data to segregate critical influencing variables (CIV) values;
predicting variables of interest using the created master PIDT model wherein the segregated CIV values are within the range of CIV values associated with created master PIDT models; and
utilizing the predicted variables of interest for a digital twin purpose wherein the predicted variables of interest from the master PIDT models are within a predefined accuracy.

15. The one or more non-transitory machine-readable information storage mediums as claimed in claim 14, wherein the master PIDT model is updated with a revised range of CIVs and input data if the segregated CIV values are not within the range of CIVs of the master PIDT model and the predicted variable of interest are not within the predefined accuracy.
